# EUROPEAN PATENT APPLICATION

(11) **EP 1 646 004 A1**
(43) Date of publication of application: **12.04.2006**
(21) Application number: 05255391.4
(22) Date of filing: 02.09.2005
(51) Int. Cl.: G06Q 30/00

(54) **Renewal proposal support system**

(30) Priority: 06.09.2004 JP 2004258402
(71) Applicant: Hitachi Ltd., Tokyo (JP)
(72) Inventor: Shimoda, Atsushi, Chiyoda-ku Tokyo 100-8220 (JP); Ishida, Atsuhiro, Chiyoda-ku Tokyo 100-8220 (JP); Morita, Hirotaka, Chiyoda-ku Tokyo 100-8220 (JP)
(74) Representative: Calderbank, Thomas Roger

(57) **Abstract**

A renewal proposal support system that performs communication with a sales terminal device (30) includes a configuration information storage unit (160) for storing information on components of a product provided for a customer, a component information storage unit (240) for storing the components, a configuration rule storage unit (250) for storing information on advisability of combination between the components, and a control unit (10) for performing processing on a change of one of the components. The control means (10) refers to the configuration information storage unit (160), thereby displaying the components on the sales terminal device (30), and notifies an operator of the sales terminal device (30) of other component that cannot be combined with the one of the components targeted for the change, upon receipt of a command for the change of the one of the components from the sales terminal device (30).

## Description

The present invention relates to a system for supporting a renewal proposal operation of a product.

In recent years, products such as a computer or an automobile have become wide spread. Thus, for a salesperson in a manufacturing company, it has become important to respond to a demand for replacement of the products as well as to cultivate new customers. Further, a period in which these products have market values is being reduced. Thus, stimulation of the demand by renewal of the products already delivered to customers is more important.

On the other hand, production of the products of an assembly type such as the computer and the automobile in conformity with ordered specifications has become spread. In this production method, the specifications of the products are customized according to the individual requests of customers. The challenge to achieve production in conformity with the ordered specifications is therefore to accurately reflect the requests of the customers on the configurations of the products.

Accordingly, in order to promote sales of the assembly-type product, it is important to quickly and accurately prepare a product configuration proposal matching the request of each customer.

As a technique for proposing renewal of a product delivered to the customer, JP-A-2001-222579 discloses a technique in which the renewal timing of the product is predicted from product information of the customer and information on an appropriate alternative product is notified to the customer.

JP-A-2000-137739 discloses a technique for quickly and accurately generating a product configuration, matching the request of each customer. In JP-A-2000-137739, a description is given to a product in which equipment selected from a plurality of pieces of equipment is mounted on the main body of the product, thereby implementing various specifications of the product. Using the technique disclosed in JP-A-2000-137739, it is determined whether certain equipment can be mounted on the product or not, and support for specification setting is thereby performed.

Salespersons have a lot of business negotiations, and narrow down the business negotiations to promising cases, thereby performing actual renewal proposals. However, generally, it is difficult to determine which case is promising or not. Thus, development of a technique for supporting the narrowing down of the business negotiations to the promising cases is desired.

When renewal of a product is proposed for a customer, it must be determined whether a component to be newly introduced can be combined with other components that remain unchanged or not. Among the other components that remain unchanged, there are some components of which sales has already been terminated, so that the determination whether the component to be newly introduced can be combined with these components is difficult.

An object of the present invention is therefore to reduce a load on the operation of narrowing down of cases by a salesperson who makes a renewal proposal of a component to a customer and to reduce a load on the operation of making a determination whether the component to be newly introduced can be combined with other components which remain unchanged or not. According to the present invention, a renewal proposal operation of the product can be made to be efficient.

In order to achieve the object described above, a renewal proposal support system according to the present invention, which performs communication with a business terminal device, includes:
a configuration information storage unit for storing information on components of a product provided for a customer;
a component information storage unit for storing the components being currently handled and the components handled in a past;
a configuration rule storage unit for storing information on advisability of combination between the components stored in the component information Storage unit; and
a control unit for performing processing on a change of one of the components of the product provided for the customer.

The control unit refers to the configuration information storage unit, thereby displaying the components of the product provided for the customer on the sales terminal device. Upon receipt of a command for the change of the one of the components from the sales terminal device, the control unit notifies an operator of the sales terminal device of other one of the components that cannot be combined with the one of the components targeted for the change.

Preferably, the component information storage unit stores sales status information indicating whether each of the components is being currently handled or was handled in the past, and the control unit displays the sales status information on the sales terminal device.

Further, the component information storage unit manages the components item by item, the item indicating the product type of each of the components. The control unit can display an alternative one of the components as an alternative to the one of the components targeted for the change, the alternative one of the components of the product being provided for the customer, being currently handled, and belonging to the same item as the one of the components targeted for the change.

Further, the component information storage unit stores a performance indicator and a price fcr each component, and upon receipt of the command for the change of the one of the components, the control unit can display on the sales terminal device a relationship between a cost required fcr the change and a performance improvement obtained from the change, based on the performance indicator of the one of the components before the change, the performance indicator of other one of the components after the change, and the price of the other one of the components after the change.

In addition, the renewal proposal support system further includes:
a business negotiation information storage unit for storing information on a business negotiation with the customer, the information including the total amount of the business negotiation; and
a customer information storage unit for storing information on the customer.

The control unit can calculate the amount of the business negotiation and an indicator on the likelihood of establishment of the business negotiation by referring to the business negotiation information storage unit and the customer information storage unit.

The customer information storage unit stores at least one of information on performance with the customer, the share of the product on the side of the customer, and performance of the customer, and at the time of the calculation of the indicator, the control unit refers to the at least one of the information on the performance with the customer, the share of the product on the side of the customer, and the performance of the customer, thereby calculating the indicator on the likelihood of establishment of the business negotiation with the customer.

Other objects, features and advantages of the invention will become apparent from the following description of the embodiments of the invention taken in conjunction with the accompanying drawings.

### IN THE DRAWINGS

Fig. 1 is a block diagram showing a configuration of a renewal proposal support system according to the present invention;
Fig. 2 is a table showing an example of a data structure of a business negotiation information DB 140;
Fig. 3 is a table showing an example of a data structure of a customer information DB 150;
Fig. 4 is a table showing an example of a data structure of a configuration information DB 160;
Fig. 5 is a table showing an example of a data structure of a product information DB 230;
Fig. 6 is a table showing an example of a configuration of a configuration rule DB 250;
Fig. 7 is a table showing an example of a configuration of a configuration rule DB 250;
Fig. 8 shows an example of an input and editing screen 300 on product information and the like, displayed through a Web processing unit 210 of a design system 20;
Fig. 9 is a diagram showing an outline of processing performed by a sales system 10;
Fig. 10 is a graph showing an example of a business negotiation scatter diagram;
Fig. 11 is a diagram showing an example of a screen 600 on which configuration information is displayed;
Fig. 12A is a flowchart for explaining an independent change;
Fig. 12B is a flowchart for explaining a dependent change;
Fig. 13A is a flowchart showing a specific example of the independent change;
Fig. 13B is a flowchart showing a specific example of the dependent change;
Fig. 14A is a flowchart showing another specific example of the independent change;
Fig. 14B is a flowchart shewing another specific example of the dependent change;
Fig. 15 is a graph showing an example of a price-to-performance mapping diagram;
Fig. 16 shows an example of a estimate 800; and

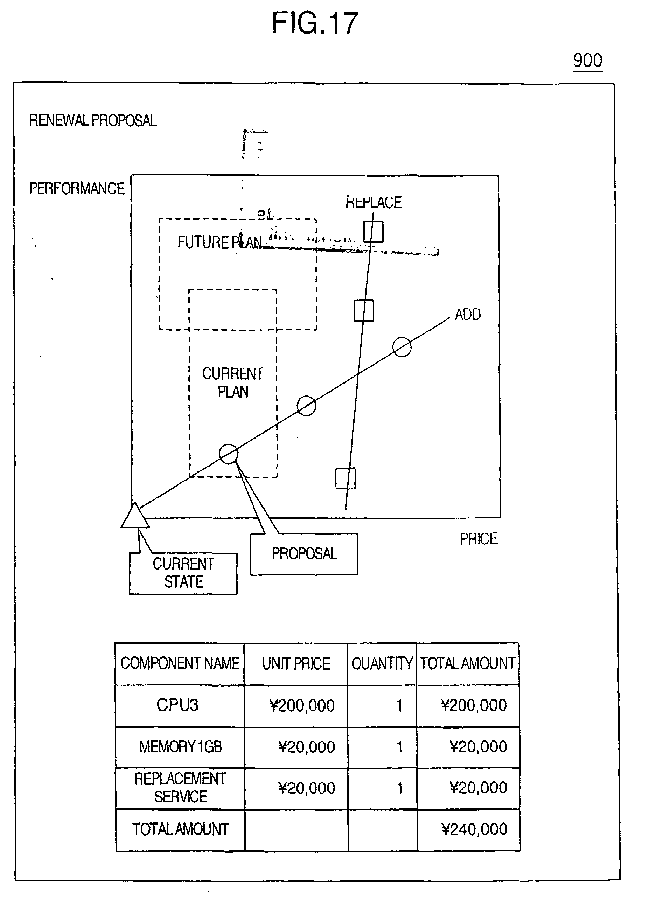

Fig. 17 shows an example of a proposal 900.

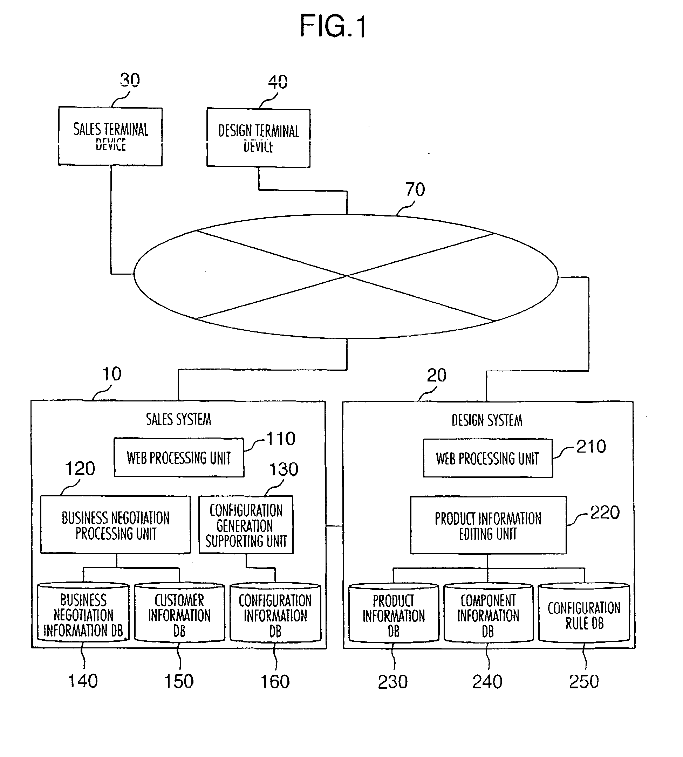

An embodiment of the present invention will be described below. Fig. 1 is a block diagram showing a configuration of a renewal proposal support system to which the present invention has been applied.

As shown in Fig. 1, the renewal proposal support system is constituted from a sales system 10, a design system 20, a sales terminal device 30, and a design terminal device 40. All of these systems and devices are connected to a computer network 70.

The sales system 10 manages information on business for making a renewal proposal of a product to a customer. The design system 20 manages design information on various components necessary for the renewal proposal.

In this embodiment, a computer system of a certain manufacturing company will be taken as an example of the product targeted for renewal and described. The present invention is not, however, limited to the computer system, and can be applied to assembling products as a whole of which components can be changed.

Each of the sales system 10 and the design system 20 can be configured by using a general-purpose server computer, for example. Typically, the Internet can be used for the computer network 70. Alternatively, the sales system 10 and the design system 20 can also be connected a LAN (Local Area Network) or the like, and may be configured to enable direct exchange of information without using the computer network 70 as the medium of communication.

The sales terminal device 30 is the terminal device used by a salesperson, and can be configured by using a general information processing device or the like equipped with a Web browser function. The sales terminal device 30 is so configured that communication with the sales system 10 can be performed through the computer network 70 using wired or wireless communication means. The salesperson can use an information processing device of a portable type as the sales terminal device 30. Then, he can visit the customer and use this system by wirelessly connecting the sales terminal device 30 to the computer network 70.

The design terminal device 40 is the terminal device used by a design person in charge of design of various components used for the renewal proposal, and can be configured by using the general information processing device or the like equipped with the Web browser function, for example. The design terminal device 40 is so configured that communication with the sales system 10 can be performed through the computer network 70, LAN, or the like.

In Fig. 1, one unit of the sales terminal device 30 and one unit of the design terminal device 40 are shown. Preferably, a plurality of the sales terminal device 30 is provided for each salesperson, and a plurality of the design terminal device 40 is provided for each design person, for example.

Referring to Fig. 1, the sales system 10 includes a Web processing unit 110, a business negotiation processing unit 120, a configuration generation supporting unit 130, a business negotiation information DB (database) 140, a customer information DB 150, and a configuration information DB 160.

The Web processing unit 110 performs processing for exchanging information with the sales terminal device 30 through the medium of a Web page. The business negotiation processing unit 120 refers to the business negotiation information DB 140 and the customer information DB 150 and performs processing for managing information on a business negotiation. The configuration generation supporting unit 130 refers to the configuration information DB 160 and also obtains information on the product from the design system 20, thereby generating information on the renewal to be proposed to the customer.

Referring to Fig. 1, the design system 20 includes a Web processing unit 210, a product information editing unit 220, a product information DB 230, a component information DB 240, and a configuration rule DB 250.

The Web processing unit 210 performs processing for exchanging information with the sales terminal device 30 through the medium of a Web page. The product information editing unit 220 performs processing for editing information to be recorded in the product information DB 230, component information DB 240, and configuration rule DB 250.

Referring to Fig. 1, the sales system 10 is configured as one system. A hierarchical structure constituted from a plurality of server computers including a Web server that functions as the Web processing unit 110, application servers that function as the business negotiation processing unit 120 and the configuration generation supporting unit 130, and database servers that function as the business negotiation information DB 140, customer information DB 150, and configuration information DB 160 may also be formed. With this arrangement, service provided by respective units and databases can be shared, for implementation, so that quick service can be provided. Similarly, the design system 20 can also be configured from a plurality of server computers.

Next, a data structure of each database in this renewal proposal support system will be described.

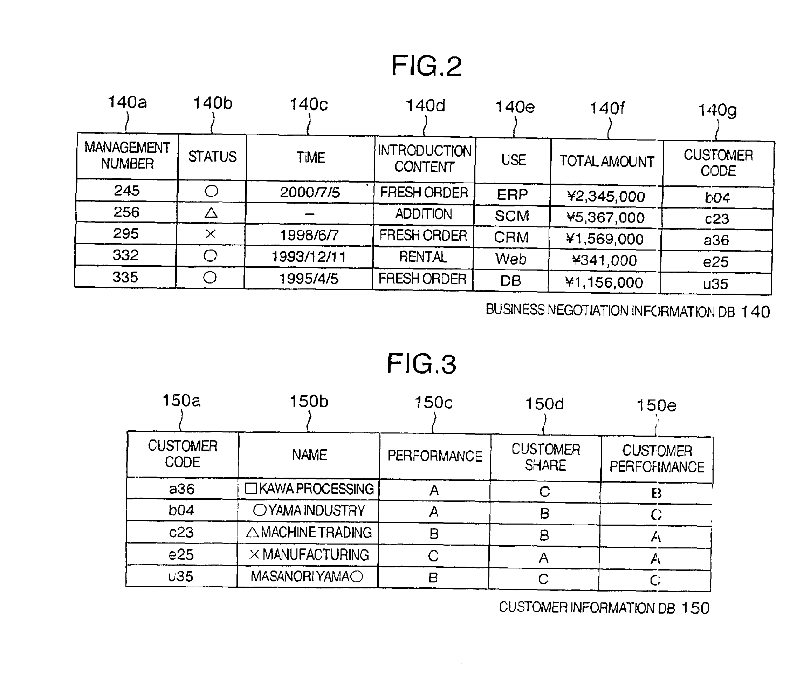

Fig. 2 is a table showing an example of the data structure of the business negotiation information DB 140. The business negotiation information DB 140 is the database in which information on a business negotiation with a customer is recorded. As shown in Fig. 2, the business negotiation information DB 140 manages the business negotiation information using a management number 140a, a status 140b, a time 140c, an introduction content 140, a use 140e, a total amount 140f, and a customer code 140g used as one record. In other words, the business negotiation information DB 140 records one piece of business negotiation information as one record.

The management number 140a is the management number for identifying business negotiation information. The status 140b indicates the status of the business negotiation by "O (receipt of an order)", "x (failure to receive an order)", or "Δ (business negotiation being in progress)". The time 140c indicates the fixed time in which the order has been received or the order has been failed to be received. The introduction content 140d indicates a category such as a fresh order, addition, purchase, or rental of the product. The use 140e indicates use of the computer system targeted for a business negotiation. The total amount 140f indicates the total amount of a case targeted for a business negotiation. The customer code 140g is an identifier for identifying the customer who is the other party of a business negotiation.

Each item of these records recorded in the business negotiation information DB 140 can be input for each business negotiation information, using the sales terminal device 30 by the salesperson

Fig. 3 is a table showing an example of a data structure of the customer information DB 150. The customer information DB 150 is the database for recording information on the customer. As shown in Fig. 3, the customer information DB 150 manages a customer code 150a, a name 150b, performance 155c, a customer share 150d, and customer performance 150e as one record. In other words, the customer information DB 150 manages the record for each customer.

The customer code 150a is the identifier for a customer. The name 150b is the name of a customer. The performance 150c is obtained by ranking the performance of a customer into one of three ranks A, B, and C according to a rule determined in advance. As the rule determined in advance, ranking according to the value of the total amount of received orders can be pointed out. The value of the total amount of the received orders is calculated by the number of receiving orders multiplied by the price of each received order. The customer share 150d indicates the share of computer systems of the manufacturing company in all computer systems of the customer, using one of the three ranks A, B, and C. The share is calculated by the ratio of the number of the computer systems of the manufacturing company to the total number of the computer systems of the customer. When the value of the denominator of the ratio for determining the share is unknown, an estimated value can be employed. The customer performance 150e indicates the latest performance of the customer (such as increased revenue and increased profit, increased revenue but decreased profit, decreased revenue and decreased profit, or the like) using one of the three ranks A, B, and C.

Each item of these records recorded in the customer information DB 150 can be input, using the sales terminal device 30, when new information is obtained.

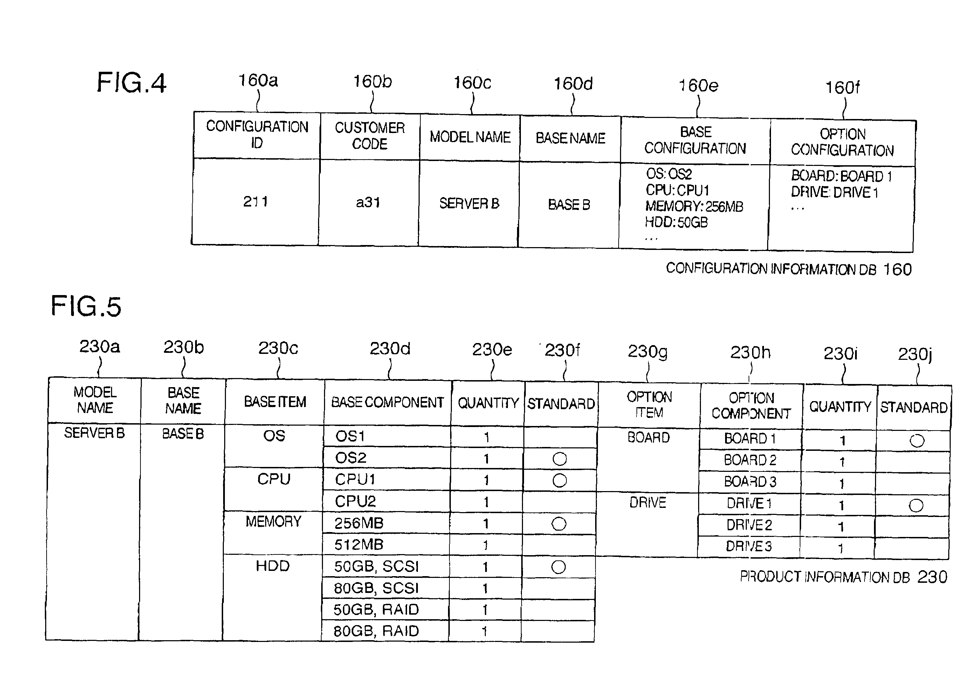

Fig. 4 is a table showing a data structure of the configuration information DB 160. The configuration information DB 160 is the database in which the configuration of the computer system provided for a customer is recorded. As shown in Fig. 4, the configuration information DB 160 manages a configuration ID 160a, a customer code 160b, a model name 160c, a base name 160d, and a base configuration 160e, and an option configuration 160f as one record. In other words, the configuration information DB 160 manages the configuration of one computer system as the one record.

The configuration of the computer system used in this embodiment will be described. The computer system in this embodiment is handled by the model indicated by the model name. Each model has a main configuration indicated by the base name. A base is constituted from base items such as a CPU (central processing unit), a memory, an HDD (hard disk drive), an OS (operating system), and the like. A plurality of base components can be selectively adopted for a base item. With respect to a certain base, for example, either (or both) of a CPU1 and a CPU2 can be adopted for the CPU.

In addition to base components in the base, an option item can be added as an option configuration. A plurality of option components can be selectively adopted for the option item as well. To a certain base, a board 1 and a drive 1, for example, can be added as option components.

The contents of the base items or option items for each base are determined according to a sales pattern or according to whether the base items or the optional items can be combined with the computer system based on the specifications of the computer systems. Sale of old models of the respective products constituting the base, base items, and option items is terminated or the successor model of a certain model of these products appears.

The design system 20 suitable for information management of an assembling product which often has a model change as mentioned above will be described, The design system 20 has following three types of databases.

The product information DB 230 is the database in which components that can be combined with one another for each model the computer system are recorded. The component information DB 240 is the database in which detailed information on each component is recoded. The configuration rule DB 250 is the data base in which combination rules between the components are recorded.

The design system 20 in this embodiment becomes effective by an organic combination of these three databases in the product information editing unit. Each database will be described in detail below.

The product information DB 230 of the design system 20 is the database in which information on the base and an option for each model is recorded.

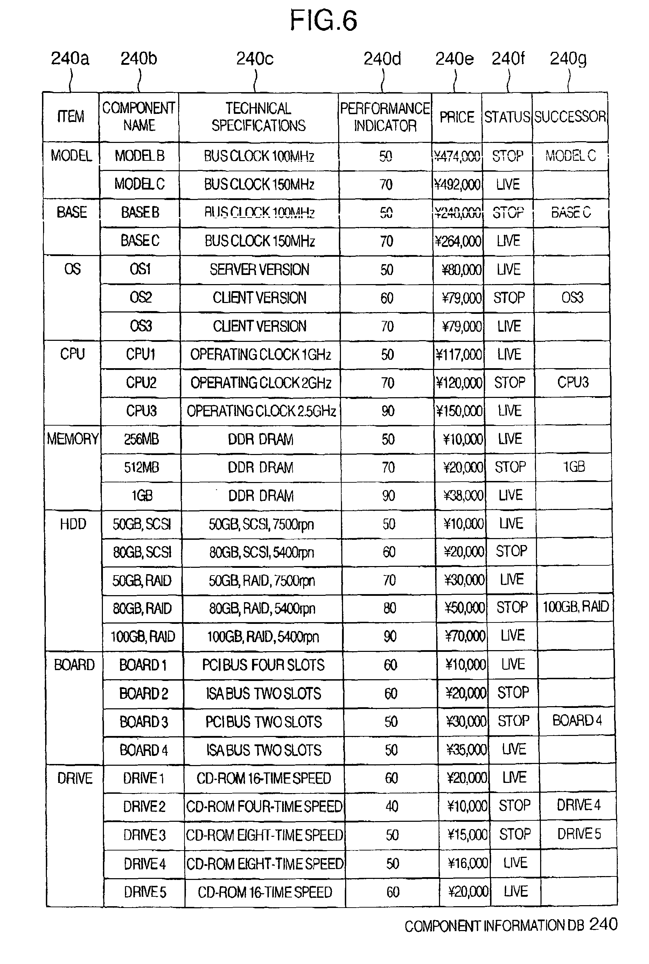

Fig. 5 is a table showing an example of a data structure of the product information DB 230. As shown in Fig. 5, the product information DB 230 manages a model name 230a, a base name 230b, a base item 230c, a base component 230d, a quantity 230e, a standard 230f, an option item 230g, an option component 230h, a quantity 230i, and a standard 230j.

The product information DB 230 will be specifically described with reference to the example shown in Fig. 5,

A system having the model name of a "server B" is the system provided with a base B. As base items, the "OS", "CPU", "memory", "HDD" and the like are present. As the "OS" of the base B, an OS1 or an OS2 can be selected. As the "CPU" of the base B, a CPU 1 or a CPU 2 can be selected. As the memory of the base B, the memory of 256MB or the memory of 512MB can be selected. As the HDD of the base B, the HDD of 50GB, SCSI (Small Computer System Interface), the HDD of 80GB, SCSI, the HDD of 50GB, RAID (Redundant Arrays of Inexpensive Disks, or HDD of 80GB, RAID can be selected. The quantity of each of these base components is "one". A base component in the column of the base component 230d having the mark of "O" in the column of the standard 230f indicates that the component is the standard base component in the base B.

A "board", a "drive", and the like can be added to the base B as the option items. As the "board", the "board 1", a "board 2", or a "board 3" can be selected. As the "drive", the "drive 1", a "drive 2", or a "drive 3" can be selected. The quantity of these option components is "one". A component in the column of the option component 230h having the mark of "O" in the column of the standard 230j indicates that the component is the standard option component in the base B.

Each item of the product information DE 230 can be input by using the design terminal device 40 by a designer or the like.

The component information DB 240 of the design system 20 is the database in which information for each base item and each option item is recorded.

Fig. 6 is a table showing an example of a configuration of the component information DB 240. As shown in Fig. 6, the component information DB 240 manages an item 240a, a component name 240b, technical specifications 240c, a performance indicator 240d, a price 240e, a status 240f, and a successor 240g.

The component information DB 240 will be specifically described with reference to the example shown in Fig. 6.

The item 240a is the information showing the product type of a component, which includes the "base", "OS", "CPU", and the like, for example.

The component name 240b is the name of a specific component for each item. For the item "base", the "base B" and a "base C" are included. For the item "CPU", the "CPU 1", "CPU 2", and a "CPU 3" are included.

The technical specifications 240c are information showing specifications of each component, According to these specifications, the performance indicator is defined by the design person or the like, and the value of the performance indicator is recorded in the column of the performance indicator 240d. The performance indicator 240d is a relative value which becomes a measure showing a degree of improvement of performance when a component is changed or added.

The price 240e shows the unit price of a component.

The status 240f shows whether a component is an existing component or sale of the component has been terminated. A status of "LIVE" indicates that the component is the existing component that is on sale. A status of "STOP" indicates that the sale of the component has been terminated.

The successor 240g indicates a successor component of a certain component when sale of the certain component has been terminated. In the example shown in Fig. 6, the "base B" is shown to be the component of which sale has been terminated, and the "base C" is shown as the successor component of the "base B".

When a new component is adopted, or when sale of a certain component is stopped, the design person updates the component information DB 240.

The configuration rule DB 250 of the design system 20 is the database in which information on components or the like that can be combined with the base is recorded.

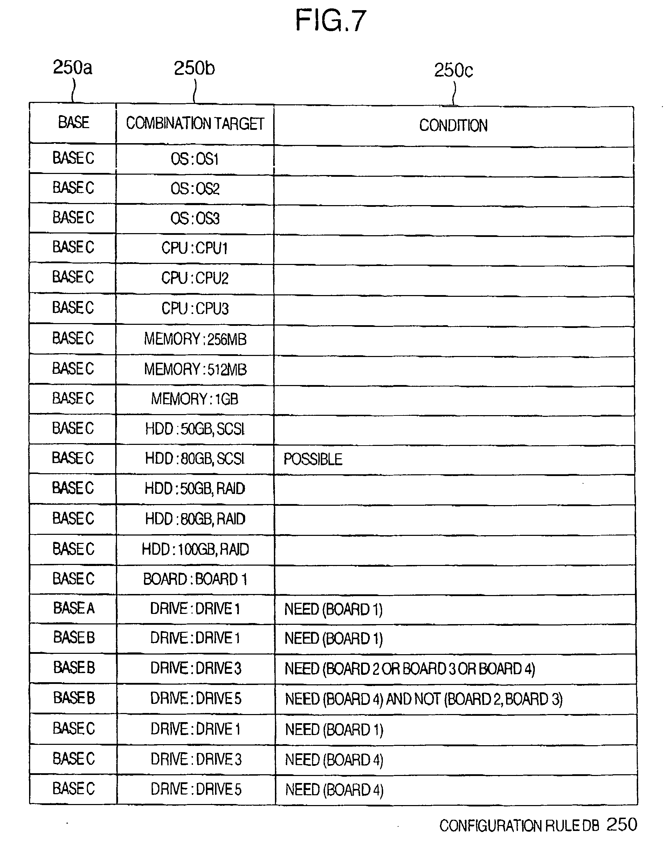

Fig. 7 is a table showing an example of a configuration of the configuration rule DB 250. As shown in Fig. 7, the configuration rule DB 250 manages a base 250a, a combination target 250b, and a condition 250c. A component that can be combined with the base is recorded in the column of the combination target 250b. In this case, when a condition to be satisfied for the combination is present, the condition is recorded in the column of the condition 250c. On the other hand, the base and the component that are not recorded in the configuration rule DB 250 cannot be combined to each other.

Referring to the example in Fig. 7, the configuration rule DB 250 will be specifically described. For combination of the base with the OS, for example, the "base C" can be unconditionally combined with the "OS1", "OS2", or an "OS3". For combination of the base with the HDD, combination of the "base C" with the HDD of "80GB, SCSI" is recorded as "POSSIBLE" in the column of the condition 250c. This shows that this combination of the components is not for sale, but can be made in terms of the performance of the computer system.

For combination of the "base A" with the "drive 1", "NEED (board 1)" is recorded in the column of the condition 250c. It shows that when combining the "base A" with the "drive 1", the "board 1" is necessary.

For combination of the "base B" with the "drive 3", "NEED (board 2 or board 3 or board 4)" is recorded in the column of the condition 250c. It shows that when combining the "base B" with the "drive 3", either of the "board 2", "board 3" or a "board 4" is necessary.

Further, for combination of the "base B" with a "drive 5", "NEED (board 5) AND NOT (board 2, board 3)" is recorded in the column of the condition 250c. It shows that when combining the "base B" with the "drive 5", the "board 5" is necessary, and neither of the "board 2" nor the "board 3" must be included.

Fig. 7 describes the rules in a tabular form. Using the "base" and the "combination target" as a column and a row and using the condition for combination of the "base" and the "combination target" as a matrix, information may be described and managed. In the component information DB 240, the statuses of the "base B", "board 2", and "board 3" are indicated as "STOP", and sale of these components has been terminated. As described above, in this embodiment, by managing information on combination of the components of which sale has been terminated, a load on the salesperson at the time of making a renewal proposal is reduced.

When a new component is adopted, or when sale of a certain component is stopped, the design person updates the component rule DB 250.

Next, processing in this embodiment will be described.

First, the design person inputs data necessary for the product information DB 230, component information DB 240, and configuration rule DB 250 in advance, using the design terminal device 40. The Web processing unit 210 of the design system 20 can cause an input and editing screen for this purpose to be displayed on the design terminal device 4C.

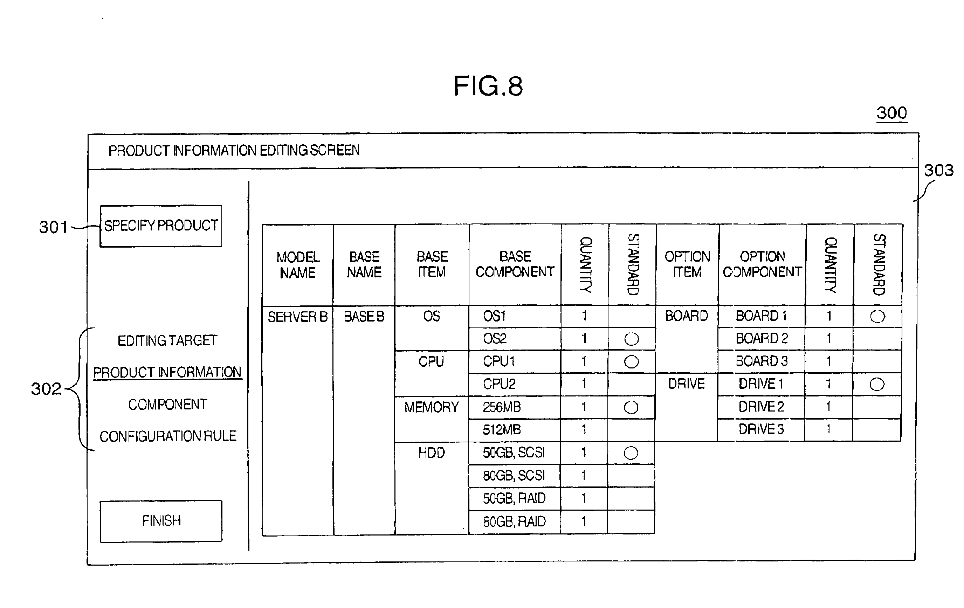

Fig. 8 shows an example of an input and editing screen 300 on product information and the like, displayed through the Web processing unit 210 of the design system 20.

As shown in Fig. 8, the input and editing screen 300 includes a button for specifying a product, a region for specifying an editing item (the data base targeted for editing), and an editing screen 303, and the like, so that the design person can readily input and edit the product information and the like.

The salesperson inputs necessary data into the business negotiation information DB 140, customer information DB 150, and configuration information DB 160 in advance, using the sales terminal device 30.

Based on the product information DB 230, component information DB 240, configuration rule DB 250, business negotiation information DB 140, customer information DB 150, and configuration information DB 160, all of which have various data recorded therein by the preprocessing described above, the sales system 10 performs processing as described below.

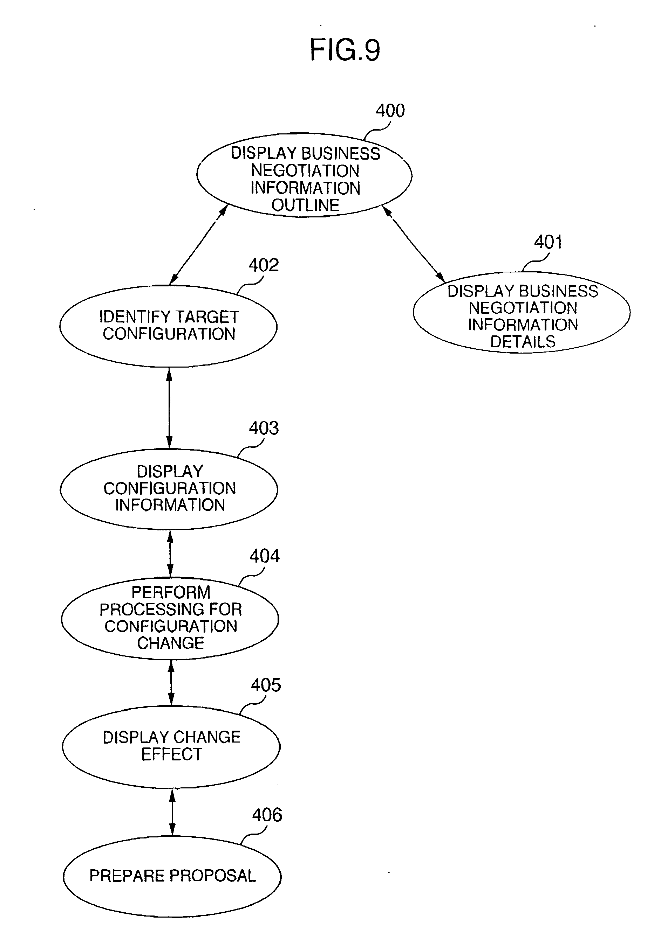

Fig. 9 is a diagram showing an outline of the processing performed by the sales system 10. The sales system 10 performs business negotiation information outline display processing 400, business negotiation information details display processing 401, target configuration identification processing 402, configuration information display processing 403, configuration change processing 404, change effect indicator display processing 405, and estimate and proposal display processing 406.

First, the business negotiation information outline display processing 400 will be described. In the business negotiation information outline display processing 400, the outline of business negotiations that are in progress or that were handled in the past is displayed, thereby providing support for narrowing down business negotiations to see which business negotiation is targeted for the proposal by the salesperson.

In the business negotiation information outline display processing 400, business negotiation information is input from the business negotiation information DB 140. Further, using the customer code of each of the business negotiation information in the column of the customer code 140g as a key, customer information is extracted from the customer information DB 150, thereby obtaining the customer information on each business negotiation.

Next, based on the extracted information, a display indicator is calculated. The display indicator is a value which becomes a measure of the degree of certainty for establishment of a renewal negotiation for each business negotiation.

The display indicator can be obtained by the following equation, for example:
Display Indicator of the "Degree of Certainty" = Elapsed Time Factor ∗ Use Factor ∗ Performance Factor ∗ Customer Share Factor ∗ Customer Performance Factor (in which a mark ∗ is an operator showing consideration of each factor).

The elapsed time factor calculates a time elapsed from introduction of the computer system to a current time based on the time 140c of business negotiation information. The computer system is given a mark of 1.0 when five years have passed since the introduction of the computer system. When two to five years have passed since the introduction of the computer system, the computer system is given a mark of 0.5. When two or less years have passed since the introduction of the computer system, the computer system is given a mark of 0.2. A decrease in the mark may be caused because the computer system has become obsolescent with a passage of time, so that the degree of certainty of renewal will be increased.

The use factor gives a mark for each use 140e of business negotiation information. The given mark can be set to 1.0 for a DB, 0.8 for a Web, 0.5 fcr SCM (Supply Chain Management) and CRM (Customer Relationship Management), and 0.2 for ERP (Enterprise Resource Planning), for example. The decrease in the mark may be caused because in the system of which scale-up factors are increased with a passage of time, the degree of certainty of the renewal will be increased. The capacity of the DB, for example, becomes insufficient with the passage of time, and it is more likely that addition of another DB is performed. On the other hand, the frequency with which a once-constructed environment for the ERP of the like is changed is low.

The performance factor gives marks of 1.0, 0.5, and 0.2 to the grades of "A", "B", and "C", in the column of the performance 150c with customers in the customer information, respectively. The decrease in the mark may be caused because the probability of receiving the order of the renewal will be higher for the customer with a good past performance.

The customer share factor gives marks of 1.0, 0.5, and 0.2 to the grades of "A", "B", and "C" in the column of the customer share 150d of the customer information, respectively. The decrease in the mark may be caused because the higher the customer share is, the more advantageous receiving the order of the renewal is due to an affinity for the computer system that has been hitherto used.

The customer performance factor gives marks of 1.0, 0.5, and 0.2 to the grades of "A", "B", and "C" in the column of the customer performance 150e of the customer information, respectively. The decrease in the mark may be caused because the degree of certainty of spending on new plant and equipment will be higher in an enterprise with a good business performance.

As a result of calculation described above, the degree of certainty of the renewal becomes as follows in the case of the business negotiation information with the management number 245.

The display indicator of the "degree of certainty" is the figure for relative comparison. This display indicator enables relative comparison of a lot of business negotiations. Business negotiations can be narrowed down to the business negotiations which are promising for the renewal, so that business resources can be concentrated on the narrowed down business negotiations.

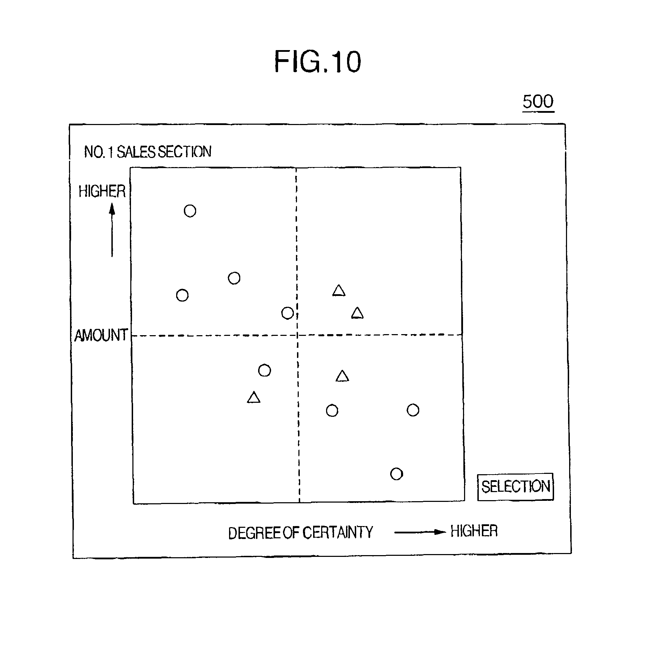

In the business negotiation information outline display processing 400, based on the calculated display indicator of the "degree of certainty" and the total amount 140f of the business negotiation information, a business negotiation scatter diagram is prepared, for display on the sales terminal device 30. Fig. 10 is a graph showing an example of the business negotiation scatter diagram.

As shown in Fig. 10, the "degree of certainty" of the calculated display indicator and the value based on the total amount 140f for each business negotiation are plotted on a two-dimensional coordinate in a business negotiation scatter diagram 500. In Fig. 10, a horizontal axis indicates the degree of certainty, and shows that the degree of certainty becomes higher toward the right of the drawing. A vertical axis indicates the amount of money, and shows that the amount of money becomes higher in the upper direction of Fig. 10. Each of the marks O and Δ plotted indicates one business negotiation. The mark Δ indicates that the business negotiation with the mark Δ is selected by the salesperson.

From the business negotiation scatter diagram, it can be visually grasped in which region limited business negotiations into which energy can be put in the future are distributed. With this arrangement, the salesperson can readily make determination as to whether the renewal proposal should be intensively made to a business negotiation with a low amount of money but a high degree of certainty, or whether the renewal proposal should be made to a business negotiation with a low degree of certainty but a high amount of money. On which of these two business negotiations importance should be placed changes according to the determination of the manufacturing company. When a term for settlement of accounts is approaching, the importance is placed on ensuring establishment of the business negotiation on the lower right of the drawing. When there is time till the term for settlement of accounts, the importance is also placed on the business negotiation on the upper left of the drawing. It is important to clearly show how each of the business negotiations is ranked on the business negotiation scatter diagram.

When a predetermined operation such as double clicking by a mouse is performed after a business negotiation has been selected on the business negotiation scatter diagram, the business negotiation information detailed display processing 401 is performed. Derailed information on the business negotiation is further displayed on the sales terminal device 30.

The detailed information on the business negotiation can be set to various business negotiation information recorded in the business negotiation information DB 140, such as the status 140b, introduction content 140d, total amount 140f, and various customer information such as the name 150b, performance 150c, and customer performance 150e. With this arrangement, the salesperson can obtain more detailed information on the business negotiation.

When the business negotiation is selected on the business negotiation scatter diagram and then a predetermined operation such as clicking of a predetermined button is received, the sales system 10 identifies the business negotiation as the target of the renewal proposal (in the target configuration identification processing 402).

When a certain business negotiation is identified as the target of the renewal proposal, the configuration information display processing 403 of a customer in a current state about the business negotiation is first performed.

In the configuration information display processing 403, configuration information is extracted from the configuration information DB 160 using the customer code 150a about the identified business negotiation as the key, and the screen based on the extracted information is displayed on the sales terminal device 30.

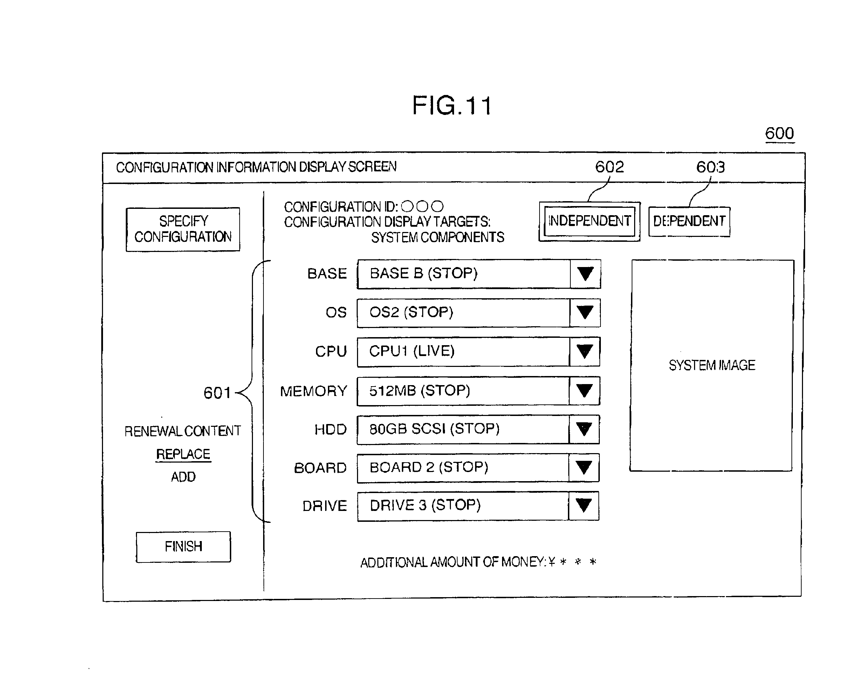

Fig. 11 is a diagram showing an example of a screen 600 on which the configuration information is displayed. As shown in Fig. 11, in a configuration display column 601 of the screen 600, the current system configuration of the customer in regard to the base, OS, CPU, and the like is shown. The example of Fig. 11 shows that the base B (STOP) is adopted as the base, the OS 2 (STOP) is adopted as the OS, and the CPU 1(LIVE) is adopted as the CPU. As described above, the (STOP) indicates that sale of a component has been terminated, while the (LIVE) indicates that the component is the existing one. This information can be obtained by referring to the status 240f in the component information DB 240.

In addition to the configuration information, the image of the system configuration and various menus and buttons for operations can be arranged on the screen 600 for displaying the configuration information. Further, on this screen, evaluation or the like when the configuration is changed so as to make the renewal proposal of the system configuration can be performed.

The configuration change processing 404 for this purpose will be described. In this embodiment, the sales system 10 can make selection between two types of configuration changes: an independent change and a dependent change. When the salesperson selects the independent change, he clicks an "independent" button 602. When the sale representative selects the dependent change, he clicks a "dependent" button 603.

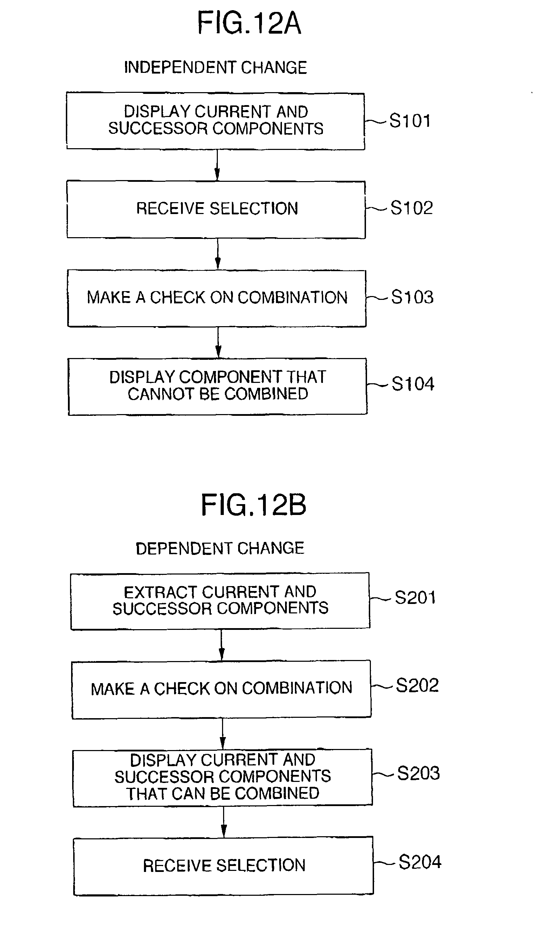

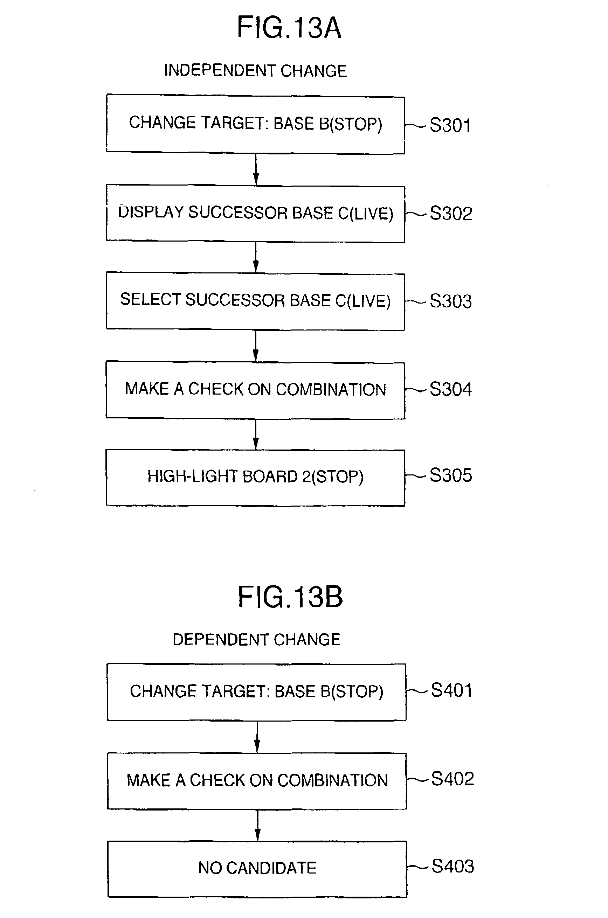

The independent change herein refers to the processing in which the following procedure is performed: in regard to a component targeted for the change, an existing component corresponding to the component targeted for the change and a successor component of the component targeted for the change are presented, and a selection of the component is received. Then, a check is made on combination of the selected component with other components in the system configuration: More specifically, the processing is performed according to a flow diagram shown in Fig. 12A. By referring to a specific example in Fig. 13A, a further description will be given to the independent change.

Fig. 13A shows an example in which the "base B (STOP)" has been targeted for the change in the configuration shown in Fig. 11 (at step S301). In this case, the sales system 10 extracts an existing base corresponding to the base B and the successor base of the base B by referring to the component information DB 240, and displays them in a menu form so that one of them can be selected (at step S101 in Fig. 12A). As a result, a "base C (LIVE)", which is the successor base of the base B is displayed (at step S301). For the display of the "base C (LIVE)", a display method using a pull-down menu associated with a region in which the base B is displayed, for example, can be employed.

In this sate, the sales system 10 receives the selection from the salesperson (at step S102 in Fig. 12A). Then, when the salesperson selects the base C, the sales system 10 makes a check on combination of the base C with other devices (at step 5103 at Fig. 12A and at step S304).

In the combination check, by referring to the configuration rule DB 250, it is determined whether the combination of the component after the change or the base C with the other components can be made or not. As the result of the check, a component with which the combination cannot be made is displayed and notified to the salesperson (at step S104 in Fig. 12A). In this embodiment, combination of the board 2 with the base C is not set in the configuration rule DB 250. Thus, it is determined that the board 2 cannot be combined with the base C. The board 2 is thus high-lighted for display, thereby notifying to the salesperson that the board 2 cannot be combined with the base C (at step S305). Incidentally, combination of the base C with the HDD of 80GB, SCSI is set to be "POSSIBLE" in the configuration rule DB 250, so that the HDD (of 80GB, SCSI) can be functionally combined with the base C, though not be allowed from the viewpoint of the sale. Thus, the HDD (of 80GB, SCSI) is high-lighted for display with a different color or the like, thereby being differentiated from the component of which the combination with the base C is functionally impossible. In this case, whether a proposal in which the HDD (of 80GB, SCSI) is included for use as special-order specifications should be made to the customer or not will be reviewed.

The dependent change, on the other hand, herein refers to the processing in which, in regard to a component targeted for the change, an existing component corresponding to the component targeted for the change and a successor component that can be combined with other combined in the system configuration are presented, and a selection of the component is received. More specifically, the processing is performed according to a flow diagram shown in Fig. 12B. By referring to a specific example in Fig. 13B, a further description will be given to the dependent change,

Fig. 13B shows an example in which the "base B (STOP)" has been targeted for the change in the configuration shown in Fig. 11 (at step S401), as in the example shown in Fig. 13A. In this case, the sales system 10 extracts the existing base corresponding to the base B and the successor base of the base B by referring to the component information DB 240 (at step S201 in Fig. 12B). Then, by referring to the configuration rule DB 250, it is determined whether the extracted bases can be combined with the other components (at step S202 in Fig. 12B). In the case of Fig. 13B, the base C is extracted, and a check is made on combination of the base C with the other components (at step S402).

As the result of the check, the existing base corresponding to the base B and the successor base of the base B for which the combination has been determined to be possible are displayed (at step S203 in Fig. 12B). In this embodiment, the extracted base C cannot be combined with the board 2, as described above. Thus, a display of "no candidate found" is made (at step S403).

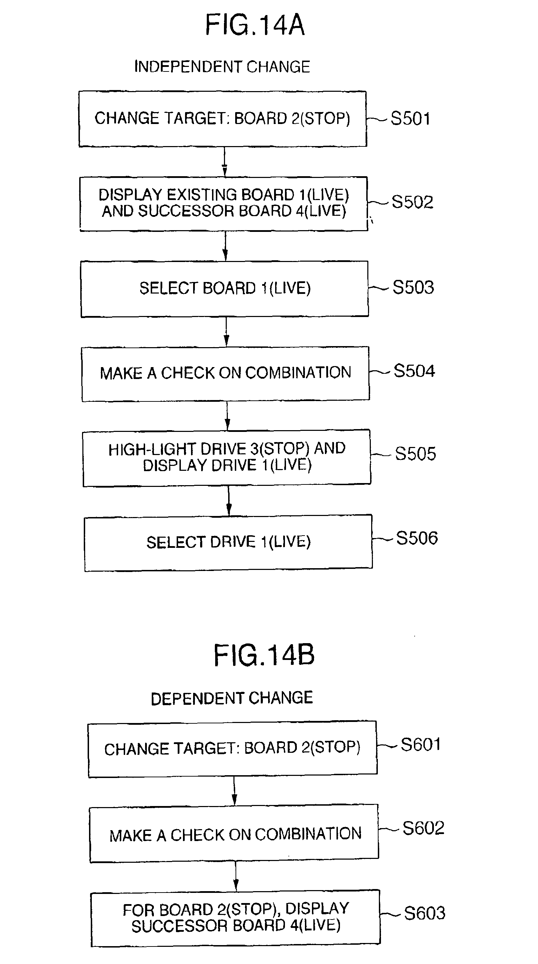

Figs. 14A and 14B shows specific examples in which the "board 2 (STOP)" has been targeted for the changes. Fig. 14A shows an example of the independent change, while Fig. 14B shows an example of the dependent change.

When the "board 2 (STOP)" is targeted for the change (at step S501) in the case of the independent change, the sales system 10 refers to the component information DB 240, thereby extracting an existing board corresponding to the board 2 and the successor board of the board 2. Then, the sales system 10 displays there, in the menu form so that one of them can be selected. As a result, the "board 1 (LIVE)", which is the existing board corresponding to the board 2, and the "board 4 (LIVE)", which is the successor board of the base 2 are displayed (at step S502). For the display of the "board 1 (LIVE)" and the "board 4 (LIVE)", the display method using the pull-down menu associated with a region in which the board 2 is displayed, for example, can be employed.

Then, when the salesperson selects the "board 1 (LIVE)" (at step S503), the sales system 10 makes a check on combination of the board 1 (LIVE) with other components (at step S504). As a result, it is found that combination of the "board 1 (LIVE)" with the "drive 3" is not stipulated in the component rule DB 250. Thus, the drive 3 is high-lighted. On the other hand, since combination of the "board 1 (LIVE)" with the "drive 1" is stipulated in the configuration rule DB 250, the sales system 10 adds the "drive 1" to the pull-down menu associated with the region in which the drive 3 is displayed, for display, thereby notifying the salesperson that combination with the drive 3 is impossible and combination with the drive 1 is possible (at step S505). With this arrangement, to the customer, the salesperson can make a proposal that the renewal can be performed by changing the drive 3 to the drive 1 in addition to the change of the "board 2 (STOP)" to the "board 1 (LIVE)" (at step S506).

When the "board 2 (STOP)" is targeted for the change (at step S601) in the case of the dependent change, the check on the combination of the board 2 (STOP) with other components is made (at step S602). Then, the "board 4 (LIVE)" that can be combined with the other components is extracted, and only the board 4 is displayed in the pull-down menu corresponding to the column in which the board 2 is displayed, as an alternative (at step S603).

The foregoing description was given to the independent change and the dependent change. The independent change is effective when the customer requires addition of a specific component, when the possibility of replacement with other component is accepted and then a configuration change plan is evaluated, and the like. With the independent change, addition of a specific component can be performed. However, when the independent change is adopted as a configuration change, it takes time and effort to check on all combinations of a component targeted for the change with other components. The dependent change is effective when the salesperson plans a replacement proposal for the current configuration of the computer system of the customer. Only the component that can be combined with the current configuration of the computer system is selected from among the components sale of which is currently made, for display. Thus, the time and the effort required for checking on all the combinations of the component targeted for the change with other components after selection of the component targeted for the change is unnecessary. However, compared with the independent change, more constraint is placed on the configuration change plan that can be prepared.

As described above, the salesperson can make access to the sales system 10 using the sales terminal device 30, and can make various renewal proposals to the customer.

Then, for a certain proposal among the presented renewal proposals, which will become an actual candidate renewal plan, the sales system 10 creates an indicator on the effect of the renewal and displays the indicator on the sales terminal device 30 (at step 405 in Fig. 9).

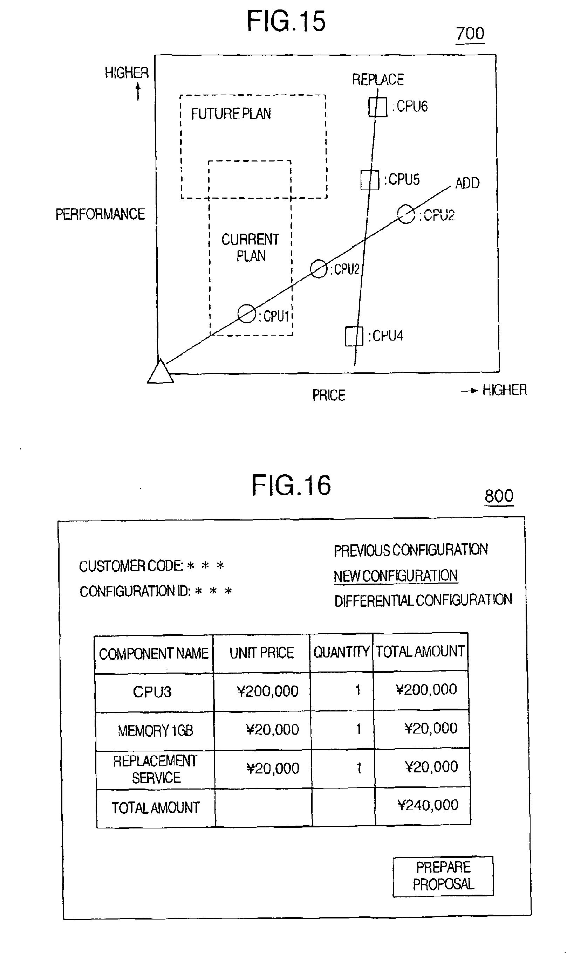

The indicator on the renewal effect in this embodiment is obtained by calculation of a cost (price) for the change of a component and an improvement in the performance of the computer system after the change. By plotting the calculated price and the calculated improvement in the performance of the computer system on the two-dimensional coordinate as shown in Fig. 15, the indicator is presented to the salesperson and the customer. The cost of the change and the improvement in the performance of the computer system after the change can be calculated by referring to the price 240e and the performance indicator 240d in the component information DB 240.

In a price-to-performance mapping diagram 700, the mark Δ indicates the performance of the computer system before the renewal. Fig. 15 shows how much of the price is necessary and what extent of the improvement in the performance is expected by the change of a component of a certain item when attention is given to the certain item, for example. The mark ○ shows a case where addition of a component has been performed, while the mark □ shows a case where a component has been replaced.

An example in Fig. 15 shows a case where attention is given to the item CPU, and the price-to-performance mapping diagram about the CPU is displayed. These prices and performance of the CPU can be calculated by referring to the performance indicator 240d and the price 240e in the component information DB 240. When addition of a component is performed, the performance indicator after the change can be obtained from the performance indicator of the component tc be added. When replacement of a component is performed, the performance indicator after the change can be obtained from a difference between the performance indicator of a component after the replacement and the performance indicator of the component before the replacement.

By comparing the amount of investment planned by the customer with the extent of the improvement in the performance (indicated by broken lines in Fig. 15) in the price-to-performance mapping diagram 700, support for making a determination as to what renewal will be made can be provided.

Generally, the customer wishes to know what degree of the effect will be obtained if he makes an investment in renewal of a product, Further, based on an existing product, the customer wishes to determine addition or replacement of a component should be currently made in view of his current budget and a future plan. The price-to-performance mapping diagram meets the requests of the customer as described above.

In a computer product of a multiple CPU type, for example, the processing performance of the computer product is determined from the data transmission efficiency of a base substrate and the number of CPUs. Thus, let us assume addition of a component is performed so as to achieve an improvement in the processing speed of the computer product. In this case, by adding a CPU with the base substrate unaltered, the processing speed of the computer product can be improved. On the other hand, let us assume replacement of a component is performed so as to achieve the improvement in the processing speed. In this case, by adding the CPU after the base substrate has been changed to the one with a high data transmission efficiency, the improvement in the transmission speed can be improved. When comparison of both of the addition of a component and the replacement of a component is made, it can be seen from Fig. 15 that when only the CPU is added, the improvement in the processing speed is gentle because the data transfer efficiency is inferior even if the expensive CPU with a high processing speed is added. On the other hand, it can be seen from Fig. 15 that when the replacement of a component is performed, the data transmission efficiency is high, so that a great improvement in the processing speed can be achieved even if a cheap CPU is added.

Referring to Fig. 15, a point sequence of the marks O indicates an existing base substrate with a low data transmission efficiency. A point sequence of the marks □ indicates the base substrate with the high transmission efficiency. The CPU1, CPU2, and CPU3 denote expensive CPUs with the high processing speed, while a CPU4, a CPU5 and a CPU 6 denote cheap CPUs.

The replacement of a component, however, requires an initial investment. The customer wishes to enhance the performance of the computer system while the investment is reduced. For this reason, a current plan and a future plan as shown in Fig. 15 are determined from the extent of the budget of the customer and the required performance of the computer system. In view of the current plan alone, the addition of a component satisfies both of the budget and the performance, so that the addition of a component is preferable. However, in view of the future plan, it can be seen that the addition of a component can be performed within the budget, but the required performance cannot be obtained from the addition of a component, and that the replacement of a component satisfies the performance but cannot be performed within the budget. The replacement of a component, however, has good cost performance in view of the improvement in the performance after the replacement. In this case, it is up to the way of thinking of the customer to select the addition or the replacement of a component. More specifically, when available financial resources are limited, the customer will select the addition of a component. When the financial resources are comparatively sufficient, the customer will select the replacement of a component. In either case, it is important to clearly explain to the customer about an alternative at the time of the addition or replacement of a component in an existing system, the cost performance of the addition or the replacement of a component, and capabilities resulting from the addition or the replacement of a component.

When the customer selects the addition or replacement of a component in the renewal plan, the sales system 10 can prepare an estimate 800 as shown in Fig. 16. Values in the estimate can be calculated by referring to the component information DB 240 and obtaining the prices of components in the column of the price 240e, required for the renewal plan.

The sales system 10 can further prepare a proposal 900 in which the indicator on the effect of the renewal and the estimate about the proposed renewal are described (at step 406 in Fig. 9).

As described above, according to the renewal proposal support system of the present invention, renewal of a product delivered to the customer can be conscientiously and elaborately proposed in view of the circumstances of the customer and the characteristics of the product. Further, according to the renewal proposal support system of the present invention, promising customers for the renewal can be narrowed down in terms of their sizes and various degrees of certainty, so that the efficiency of the sale of the product can be increased. In addition, by visualizing a price-and-benefit relationship between the configuration of an already-delivered product and the configuration of the product after the renewal, the demand for the product can be fueled. Still further, even if the product targeted for the change is the already-delivered product of which sale has been stopped, the relationship between an existing product and the already-delivered product can be kept track of. Thus, an environment capable of constructing the configuration of the product after the renewal can be provided. Due to these effects, the efficiency of the renewal can be improved. In addition, appealing power to the customer can be enhanced, so that an improvement in sales of the product caused by acquisition of an opportunity to receive an order can be expected.

It should be further understood by those skilled in the art that although the foregoing description has been made on embodiments of the invention, the invention is not limited thereto and various changes and modifications may be made without departing from the spirit of the invention and the scope of the appended claims, as interpreted by the description and drawings.

## Claims

1. A renewal proposal support system that performs communication with a sales terminal device (30), comprising:
configuration information storage means (160) for storing information on components of a product provided for a customer;
component information storage means (240) for storing the components being currently handled and the components handled in a past;
configuration rule storage means (250) for storing information on advisability of combination between the components stored in the component information storage means (240); and
control means (10) for performing processing on a change of one of the components of the product provided for the customer;
the control means (10) referring to the configuration information storage means (160), thereby displaying the components of the product provided for the customer on the sales terminal device (30), and upon receipt of a command for the change of said one of the components from the sales terminal device (30), the control means (10) notifying an operator of the sales terminal device (30) of other one of the components that cannot be combined with said one of the components targeted for the change.

2. The renewal proposal support system according to claim 1, wherein
the component information storage means (240) stores sales status information indicating whether each of the components is being currently handled or was handled in the past; and
the control means (10) displays the sales status information on the sales terminal device (30).

3. The renewal proposal support system according to claim 2, wherein
the component information storage means (240) manages the components item by item, the item indicating a product type of each of the components; and
the control means (10) displays an alternative one of the components as an alternative to said one of the components targeted for the change, said alternative one of the components of the product being provided for the customer, being currently handled, and belonging to the same item as said one of the components targeted for the change.

4. The renewal proposal support system according to claim 1, wherein
the component information storage means (240) stores a performance indicator and a price for each component; and
upon receipt of the command for the change of said one of the components, the control means (10) displays on the sales terminal device (30) a relationship between a cost required for the change and a performance improvement obtained from the change, based on the performance indicator of said one of the components before the change, the performance indicator of other one of the components after the change, and the price of said other one of the components after the change.

5. The renewal proposal support system according to claim 1, further comprising:
business negotiation information storage means (140) for storing information on a business negotiation with the customer, the information including a total amount of the business negotiation; and
customer information storage means (150) for storing information on the customer;
the control means (10) referring to the business negotiation information storage means (140) and the customer information storage means (150), thereby
calculating the amount of the business negotiation and an indicator on a likelihood of establishment of the business negotiation.

6. The renewal proposal support system according to claim 5, wherein
the customer information storage means (150) stores at least one of information on performance with the customer, a share of the product on a side of the customer, and performance of the customer; and
the control means (10) refers to said at least one of the information on the performance with the customer, the share of the product on the side of the customer, and the performance of the customer, thereby calculating the indicator on the likelihood of establishment of the business negotiation with the customer,
